# EUROPÄISCHE PATENTANMELDUNG

(11) **EP 2 730 627 A1**
(43) Veröffentlichungstag der Anmeldung: **14.05.2014**
(21) Anmeldenummer: 12192312.2
(22) Anmeldetag: 13.11.2012
(51) Int. Cl.: C09J 7/02

(54) **Flächengebilde**

(71) Anmelder: RAFI GmbH & Co. KG, 88276 Berg (DE)
(72) Erfinder: Voth, Michael, 88214 Ravensburg (DE)
(74) Vertreter: Engelhardt & Engelhardt

(57) **Zusammenfassung**

Bei einem Flächengebilde (1) zum Verbinden und Befestigen von zwei gegenüberliegenden Oberfläche (4, 5) zweier Bauteile (2, 3), bestehend aus zwei der jeweiligen Oberfläche (4, 5) zugewandten Klebeschicht (12), die jeweils eine Klebefläche (7) aufweisen, durch die eine Klebeverbindung zwischen dem Flächengebilde (1) und dem jeweiligen Bauteil (2, 3) entsteht, soll eine zuverlässige und dauerhafte Klebeverbindung zwischen zwei Bauteilen (2, 3) entstehen, die in einer möglichst lang bemessenen Zeitspanne lösbar sein soll und die beim Lösen der Klebeverbindung derart ausgestattet ist, das entweder auf den jeweiligen Bauteilen (2, 3) eine vollständige Entfernung des verwendeten Klebstoffes erfolgt, oder dass zumindest das Flächengebilde (1) in einem vorgegebenen definierten Bereich aufreißt.

Dies ist dadurch erreicht, dass in dem Flächengebilde (1) eine Trennfolie (11) angeordnet ist und dass beim Ziehen des Flächengebildes (1) in dessen Längsrichtung (6) die Klebeschicht (7) im Bereich der Trennfolie (11) gelöst ist, oder dass beim Ziehen des Flächengebildes (1) in dessen Längsrichtung (6) die Klebefläche (7) zwischen dem jeweiligen Bauteil (2, 3) gelöst ist.

## Beschreibung

Die Erfindung bezieht sich auf ein Flächengebilde zum Verbinden und Befestigen von zwei gegenüberliegenden Oberflächen zweier Bauteile nach dem Oberbegriff des Patentanspruches 1.

Derartige Flächengebilde werden auch als Klebefolie oder Klebestreifen eingesetzt und sind beispielsweise aus der DE 3 331 016 C2 zu entnehmen. Durch solche Flächengebilde, Klebefolien oder Klebestreifen soll eine Klebeverbindung entstehen, durch die zwei Oberflächen zweier Bauteile, die parallel und fluchtend zueinander verlaufen, lösbar verbunden sein.

Es hat sich jedoch nachteiligerweise herausgestellt, dass solche Flächengebilde beim Aufbringen einer in Längsrichtung des Flächengebildes ausgerichteten Zugkraft reißen. Durch die Zugkraft wird nämlich die Dicke des Flächengebildes reduziert, wodurch zwar die Klebeverbindung zwischen diesem und dem jeweiligen Bauteil gelöst werden soll, jedoch die erhebliche Gefahr besteht, dass diese Flächengebilde reißen, bevor diese vollständig entfernt sind. Solche Klebeverbindungen sind daher für die Arretierung von hochwertig Bauteilen, beispielsweise für die Verbindung von einer Blende mit einem Display, ungeeignet, denn wenn Rückstände von dem Flächengebilde auf einem der kostenintensiv herzustellenden Bauteilen zurückbleibt, ist dieses unbrauchbar und zu ersetzen. Beim Reißen des Flächengebildes kann dieses nicht mehr entfernt werden, so dass die beiden Bauteile weiterhin fest miteinander fixiert sind.

Insbesondere während der Montage von solchen hochwertigen Bauteilen hat es sich gezeigt, dass oftmals eine Demontage zu erfolgen hat, um einzelne elektrische Komponente zu reparieren oder zu ersetzen, die bei der Montage beschädigt worden sind. Üblicherweise werden daher für die Verbindung von Blenden und Displays lösbare Schraubbefestigungen eingesetzt oder aber die klebenden Flächengebilde weisen eine derart hohe Klebefestigkeit auf, die unmittelbar nach dem Anbringen nicht mehr zerstörungsfrei zu lösen ist. Dies führt jedoch zu Beschädigungen an dem jeweiligen Bauteil, so dass solche bekannten Klebestreifen für die Arretierung von hochwertigen Bauteilen ungeeignet und unpraktisch sind, da diese bei Beschädigungen von einzelnen elektrischen Komponenten, die zur Funktion des elektrischen Gerätes benötigt werden, oftmals entsorgt werden müssen.

Es ist daher Aufgabe der Erfindung, ein Flächengebilde der eingangs genannten Gattung bereit zu stellen, durch das zum einen eine zuverlässige und dauerhafte Klebeverbindung zwischen zwei Bauteilen entsteht, die in einer möglichst lang bemessenen Zeitspanne lösbar ist, und die zum anderen beim Lösen der Klebeverbindung derart ausgestaltet ist, dass entweder auf den jeweiligen Bauteilen eine vollständige Entfernung des verwendeten Klebstoffes erfolgt, oder dass zumindest das Flächengebilde in einem vorgegebenen definierten Bereich aufreißt, um die Bauteile voneinander trennen zu können.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in dem Flächengebilde eine Trennfolie angeordnet ist, ist gewährleistet, dass beim Ziehen an dem Flächengebilde in dessen Längsrichtung eine Abtrennung bzw. ein Lösen der Trennfolie von den benachbart dazu angeordneten Klebeschichten entsteht, so dass zunächst die miteinander zu verbindenden Bauteile voneinander gelöst werden können.

Alternativ dazu kann vorgesehen sein, dass beim Ziehen des Flächengebildes in dessen Längsrichtung die Klebeverbindungen zwischen dem Flächengebilde und dem jeweiligen Bauteil gelöst ist, so dass auch dadurch die zwei Bauteile voneinander getrennt werden können.

Es ist besonders vorteilhaft, wenn in dem Flächengebilde Klebeschichten vorgesehen sind, die unterschiedliche Klebeeigenschaft im Bereich des Bauteiles oder der Trennfolie aufweisen, denn dadurch kann definiert werden, in welchem Bereich das Flächengebilde aufgerissen ist. Wenn nämlich das Flächengebilde im Bereich des jeweiligen Bauteils eine geringere Klebefestigkeit besitzt als im Bereich zu der Trennfolie, löst sich das Flächengebilde von dem jeweiligen Bauteile rückstandsfrei oder vice versa.

Besonders zweckmäßig ist es, wenn Klebstoffe verwendet werden, die eine hohe Klebeeigenschaft aufweisen. Hierzu ist besonders Acrylat geeignet. Die Klebestoffe mit einer geringeren Klebefestigkeit können aus einem PE-Schaum mit zwei Klebeschichten gebildet sein.

Die Trennfolie ist üblicherweise aus einem PET-Kunststoff hergestellt.

In der Zeichnung sind zwei Ausführungsbeispiele eines erfindungsgemäßen Flächengebildes dargestellt, die nachfolgend näher erläutert sind. Im Einzelnen zeigt:
- Figur 1: ein erstes Ausführungsbeispiel eines Flächengebildes, das zwischen zwei Bauteilen zu deren lösbaren Verbindung angeordnet ist, mit jeweils zwei Klebeschichten, die eine hohe bzw. eine geringere Klebefestigkeit aufweisen, wobei in dem Flächengebilde zwischen den beiden Klebeschichten eine Trennfolie vorgesehen ist, im Schnitt,
- Figur 2: ein zweites Ausführungsbeispiel eines Flächengebildes, das zwischen zwei Bauteilen zu deren lösbaren Verbindung angeordnet ist, mit jeweils zwei Klebeschichten, die eine hohe bzw. eine geringere Klebefestigkeit aufweisen, wobei in dem Flächengebilde zwischen den beiden Klebeschichten eine Trennfolie vorgesehen ist, im Schnitt,
- Figur 3: ein Anwendungsbeispiel für die Anordnung des Flächengebildes gemäß Figur 2,
- Figur 4: das Flächengebilde gemäß Figur 2 mit einem dreischichtigen Klebeschicht-Aufbau, nämlich von zwei äußeren Klebeschichten, aus Acrylat und einer Trennschicht, die aus einem PE-Werkstoff hergestellt ist,
- Figur 5: eine Weiterbildung des Flächengebildes gemäß Figur 4, in dem die jeweilige Klebeschichtaus einem PE-Schaum besteht, die zwei Synthese-Kautschuk Klebestreifen aufweist und
- Figur 6: das Flächengebilde gemäß Figur 5 mit einer auf diese einwirkenden Zugkraft, in Längsrichtung,

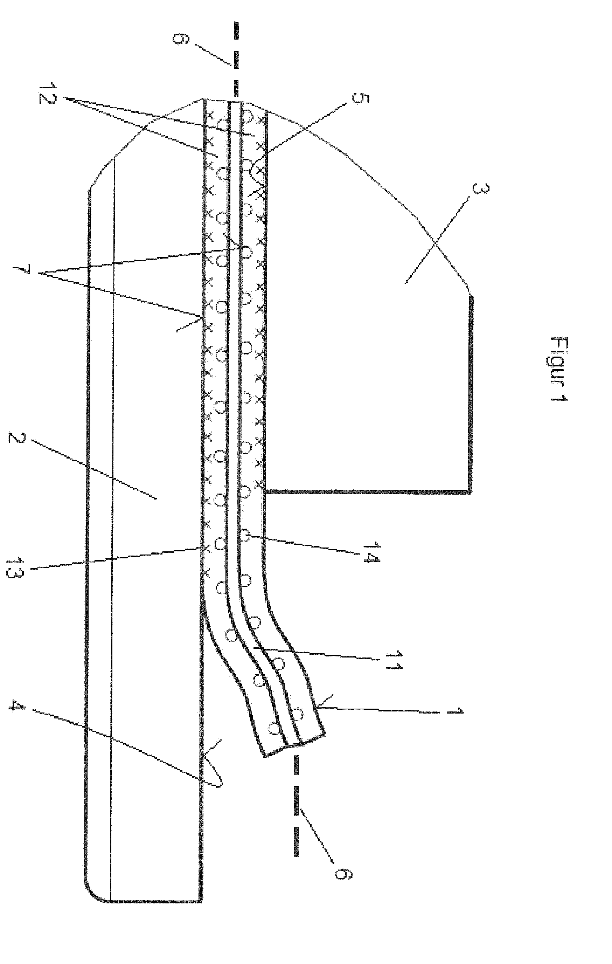

In Figur 1 ist ein Flächengebilde 1 zu entnehmen, durch das zwei Bauteile 2 und 3 dauerhaft mittels einer Klebeverbindung 7 miteinander fixiert werden sollen. Die Bauteile 2 und 3 sind technisch hochwertig und können insbesondere als Blende und Display ausgestaltet sein, für dessen Aufbau zu einem elektrischen Gerät weitere elektrische Komponenten vorzusehen sind. Während der Montage der Bauteile 2 und 3 werden diese zunächst an den beiden gegenüberliegenden Oberfläche 3 und 4 miteinander durch das Flächengebilde 1 fixiert und anschließend werden weitere Komponente, beispielsweise Leiterplatten, Sensoren und dergleichen, verbaut. Bei solchen Montageschritten kann es zu Beschädigungen an diesen Komponenten kommen, die dazu führen, dass die gesamte Baueinheit fehlerhaft ist. Es hat sich folglich herausgestellt, dass es erforderlich ist, während der Montage die Bauteile 2 und 3 voneinander lösen zu können, um die beschädigten Leiterplatten, Sensoren und dergleichen auswechseln zu können.

Zu diesem Zweck ist das Flächengebilde 1 in einer besonderen Art und Weise aufgebaut und ausgestaltet, denn im Wesentlichen besteht das Flächengebilde 1 aus einer Trennfolie 11, die zwischen zwei Klebeschichten 12 angeordnet ist. Die Klebeschichten 12 weisen dabei unterschiedliche Adhäsionskraftverteilungen auf. Solche Klebeverteilungen können beispielsweise durch unterschiedliche Klebstoffe erzielt werden. In der einen der Bauteile 2 zugewandten Oberfläche der Klebeschicht 12 ist daher ein Acrylat-Klebstoff 13 und in der der Trennfolie 11 zugewandten Oberfläche der Klebeschicht 12 ein PE-Schaum 14, der mit Klebeschichten ausgestaltet ist, vorgesehen.

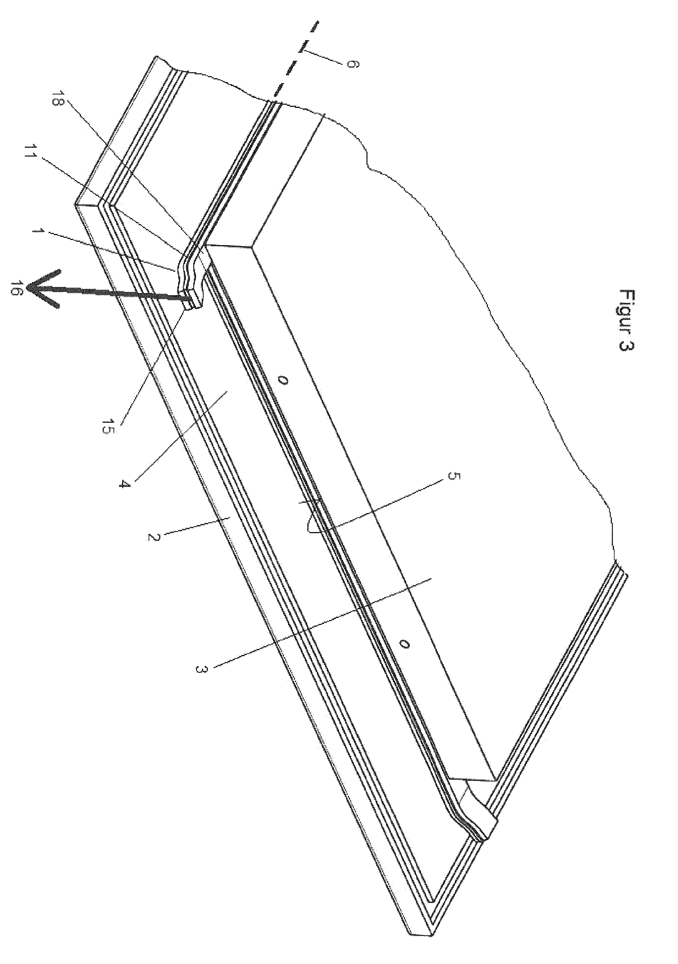

Insbesondere der Figur 3 ist zu entnehmen, dass das Flächengebilde 1 mit einer aus den Bauteilen 2 und 3 überstehenden Haltelasche 15 ausgestattet ist, die manuell oder mit Hilfe von Werkzeugen gegriffen werden kann. Sobald über die Haltelasche 15 eine Zugkraft 16 aufgebracht ist, die vorzugsweise in Längsrichtung 6 des Flächengebildes 1 verläuft, wird die Dicke des Flächengebildes 1 verringert, so dass die Klebeverbindung zwischen der Trennfolie 11 und dem PE-Schaum 18 mit Klebeschichten gelöst ist. In diesen Bereichen trennt sich somit das Flächengebilde 1 auf, so dass die beiden Bauteile 2 und 3 voneinander abgenommen werden können.

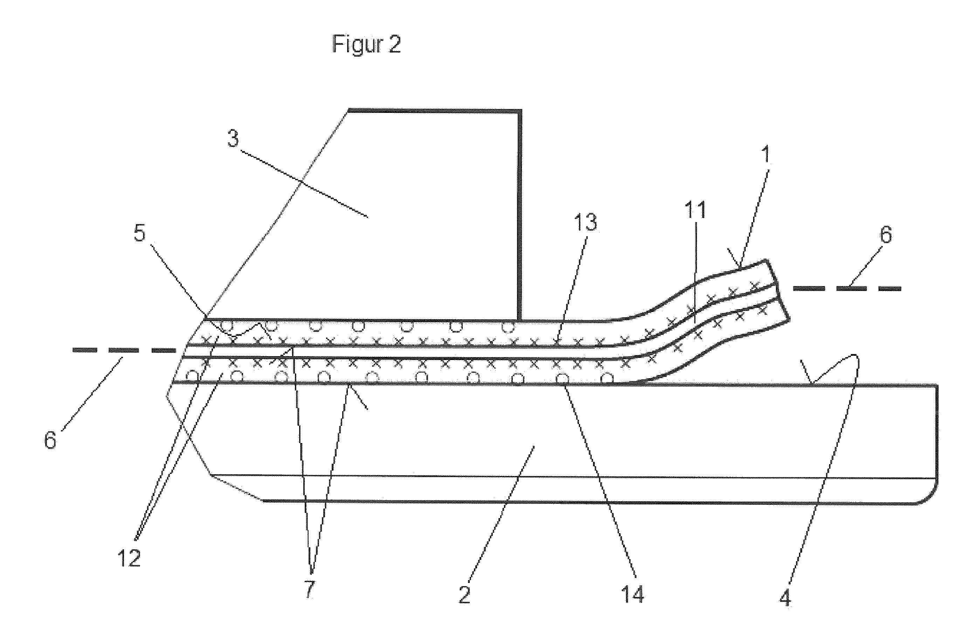

In Figur 2 ist gezeigt, dass die Klebstoff-Verteilung im Inneren des Flächengebildes 1 gegenüber dem Ausführungsbeispiel nach der Figur 1 umgekehrt ist. Denn in den Klebeschichten 12 ist nunmehr in der Oberfläche, die dem jeweiligen Bauteil 2 oder 3 zugewandt ist, ein Klebestoff mit einer geringeren Adhäsionskraft vorgesehen und in der Oberfläche, die der Trennfolie 11 zugewandt ist, ist ein Klebstoff mit einer höheren Adhäsionskraft angeordnet. Beim Aufbringen der Zugkraft 16 löst sich somit die jeweilige Klebeschicht 12 von den Bauteil 2 bzw. 3, ohne dass auf den Oberflächen 4 oder 5 der Bauteile 2 und 3 Kleberückstände anhaften. Die Klebefestigkeit zur Trennfolie 11 kann beispielsweise durch Vorbereitungsverfahren, wie Plasmabehandlung, deutlich erhöht werden.

In Figur 3 ist zudem ein konkreter Anwendungsfall für die Verbindung der beiden Bauteile 2 und 3, die in Form einer Blende und eines Displays ausgestaltet sind, zu entnehmen. Die Flächengebilde 1 sind entlang den Kanten der Bauteile 2 und 3 angeordnet. An jedem der Flächengebilde 1 ist eine aus der Blende 2 und dem Display 3 überstehende Haltelasche 15 angebracht, durch die die Zugkraft 16 auf das jeweilige Flächengebilde 1 übertragen ist.

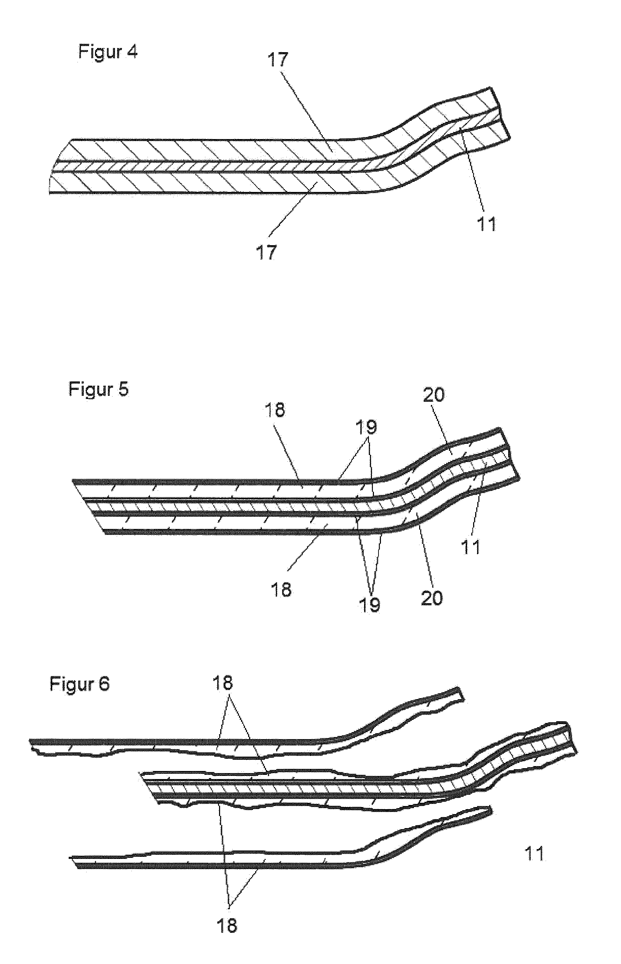

In Figur 4 ist einAusführungsbeispiel des Flächengebildes 1 abgebildet, das einen dreischichtigen Aufbau aufweist. Die Klebeschicht 12 besteht dabei aus einer Acrylklebstoffschicht 17, einer PE-Folie 11 und einer weiteren Acrylklebstoffschicht 17. Folglich umfasst das Flächengebilde 1 zwei dieser Klebeschichten 12 , zwischen denen die PE-Trennfolie 11 angeordnet ist.

Figur 5 zeigt ein andersartiges Ausführungsbeispiel einer Klebeschicht 12, die nach einem der Ausführungsvarianten der Figuren 1 oder 2 verwendet werden kann. Dabei besteht die Klebeschicht 12 aus einem dreischichtigen Aufbau 18, nämlich einer Synthese-Kautschuk-Klebstoffschicht 19, einem PE-Schaum 20 und einer weiteren Synthese-Kautschuk-Klebstoffschicht 19, so dass das Flächengebilde 1 den Aufbau diese Klebeschicht 12 aufweist, an dem die Trennfolie 11 und eine weitere Klebeschicht 12 angebracht ist.

In Figur 6 ist dargestellt, welche Auswirkungen das Aufbringen einer axial ausgerichteten Zugkraft 16 auf ein derartig ausgestaltetes Flächengebilde 1 zur Folge hat.

## Patentansprüche

1. Flächengebilde (1) zum Verbinden und Befestigen von zwei gegenüberliegenden Oberflächen (4, 5) zweier Bauteile (2, 3), bestehend aus zwei der jeweiligen Oberfläche (4, 5) zugewandten Klebeschicht (12), die jeweils eine Klebefläche (7) aufweisen, durch die eine Klebeverbindung zwischen dem Flächengebilde (1) und dem jeweiligen Bauteil (2, 3) entsteht,
**dadurch gekennzeichnet,**
**dass** in dem Flächengebilde (1) eine Trennfolie (11) angeordnet ist und dass beim Ziehen des Flächengebildes (1) in dessen Längsrichtung (6) die Klebeschicht (7) im Bereich der Trennfolie (11) gelöst ist, oder dass beim Ziehen des Flächengebildes (1) in dessen Längsrichtung (6) die Klebefläche (7) zwischen dem jeweiligen Bauteile (2, 3) gelöst ist.

2. Flächengebilde nach Anspruch 1,
**dadurch gekennzeichnet,**
**dass** in dem Flächengebilde (1) eine unterschiedliche Verteilung von Adhäsionskräften (13, 14) vorgesehen ist, die eine definierte Klebefestigkeit mit dem jeweiligen an diesen anlegenden Bauteilen (2, 3) bzw. der Trennfolie (11) aufweisen.

3. Flächengebilde nach Anspruch 2,
**dadurch gekennzeichnet,**
**dass** als Klebstoff mit einer hohen Klebefestigkeit Acrylat (13) und als Klebstoff mit einer geringeren Klebefestigkeit Synthese-Kautschuk (19) verwendet ist und dass die Trennfolie (11) aus einem PE-Schaum oder aus einem PET-Werkstoff gefertigt ist, deren Oberfläche vorzugsweise mittels eines Plasmaverfahrens vorbehandelt ist.

4. Flächengebilde nach einem der vorgenannten Ansprüche,
**dadurch gekennzeichnet,**
**dass** an dem Flächengebilde (1) eine Haltelasche (15) angeformt ist, die aus den beiden miteinander zu verbindenden Bauteilen (2, 3) übersteht und die fluchtend zu der Längsrichtung (6) des Flächengebildes (1) ausgerichtet ist.

5. Flächengebilde nach einem der vorgenannten Ansprüche,
**dadurch gekennzeichnet,**
**dass** das Flächengebilde (1) zur Verbindung eines Displays (2) mit einer Blende (3), die vorzugsweise aus Glas oder aus einem Kunststoff gefertigt ist, dient, dass das Flächengebilde (1) von der Blende (3) und dem Display (2) durch Aufbringen einer Zugkraft (16) lösbar ist und dass beim Abziehen des Flächengebildes (1) von der Blende (3) bzw. dem Display (2) die Klebeverbindung (13, 17, 18) von diesen Bauteilen (2, 3) abgetrennt sind oder dass das Flächengebilde (1) entlang der Trennfolie (11) beim Aufbringen einer axialen Zugkraft aufreißt.

6. Flächengebilde nach einem der vorgenannten Ansprüche,
**dadurch gekennzeichnet,**
**dass** die Klebeschicht (12) des Flächengebildes (1) aus drei Schichten aufgebaut ist, dass die beiden äußeren Schichten als Klebefolie oder Klebestreifen ausgestaltet sind und dass die mittlere Schicht, die zwischen den beiden äußeren Schichten angeordnet ist, als PE-Schaum (18) ausgestaltet ist.

7. Flächengebilde nach Anspruch 6,
**dadurch gekennzeichnet,**
**dass** die äußere Schicht der Klebeschicht (12) aus einem Synthese-Kautschuk-Klebstoff (19), die mittlere Schicht der Klebeschicht (12) aus einem PE-Schaum (20) und die dritte Klebeschicht aus einem Synthese-Kautschuk-Klebstoff (19) gebildet ist.

8. Flächengebilde nach Anspruch 6,
**dadurch gekennzeichnet,**
**dass** die Klebeschicht (12) des Flächengebildes (1) aus einer einzelnen Schicht Acrylatkleber besteht.
